# EUROPÄISCHE PATENTSCHRIFT

(11) **EP 1 272 079 B1**
(45) Veröffentlichungstag und Bekanntmachung des Hinweises auf die Patenterteilung: **10.09.2003**
(21) Anmeldenummer: 01923603.3
(22) Anmeldetag: 23.02.2001
(51) Int. Cl.: A47J 43/07, A47J 19/00

(54) **PASSIERGERÄT FUR EINE KÜCHENMASCHINE**
STRAINER FOR A FOOD PROCESSOR
PASSOIRE POUR ROBOT MENAGER

(30) Priorität: 31.03.2000 DE 10016297
(43) Veröffentlichungstag der Anmeldung: 08.01.2003
(73) Patentinhaber: BSH Bosch und Siemens Hausgeräte GmbH, 81669 München (DE)
(72) Erfinder: MAZEJ, Stanislav, 3303 Gomilsko (SI); AREH, Marko, 2360 Radlje ob Dravi (SI); PESEC, Jurij, 3301 Petrovce (SI)
(86) Internationale Anmeldenummer: EP0102082
(87) Internationale Veröffentlichungsnummer: WO01074215

(56) Entgegenhaltungen:
- DE-B- 1 093 961
- US-A- 4 852 814
- US-A- 5 433 144

## Beschreibung

Die Erfindung betrifft ein Passiergerät für eine Küchenmaschine. Ein Passiergerät gemäß dem Oberbegriff des Anspruchs 1 ist aus US-A-4 852 814 bekannt.

Der Erfindung liegt die Aufgabe zugrunde, ein Passiergerät für eine Küchenmaschine zu schaffen, das konstruktiv einfach aufgebaut ist und sich durch eine gute Arbeitsweise auszeichnet.

Gemäß der Erfindung wird diese Aufgabe durch ein Passiergerät für eine Küchenmaschine gelöst, das aus einem topfartig ausgebildeten, drehfest in die Rührschüssel der Küchenmaschine einsetzbaren, mit Durchtrittsöffnungen versehenen Siebteil und einem zugeordneten Passierwerkzeug besteht, das an einem mit einer Abtriebswelle der Küchenmaschine kuppelbaren Nabenteil wenigstens zwei Passierflügel aufweist, die in geringem axialen Abstand über dem Siebteil rotieren, bei welchem Passierwerkzeug die Passierflügel auf ihrer dem Siebteil zugewandten Seite mit mehreren rippenartigen, sich im wesentlichen über die ganze Länge der Passierflügel erstreckenden Erhebungen versehen sind und ferner an ihrer in Drehrichtung nacheilenden Endkante eine zum Siebteil hin vorstehende Schneidkante aufweisen. Ein solches Gerät besteht nur noch aus zwei Teilen, nämlich dem in die Rührschüssel der Küchenmaschine einsetzbaren Siebteil und dem mit der Abtriebswelle koppelbaren Passierwerkzeug, welches mit seinem Nabenteil lediglich auf das freie Ende der Abtriebswelle aufgesteckt werden muß. Durch die rippenartigen Erhebungen an den Passierflügeln wird das Passiergut entsprechend bei der Rotation der Passierflügel mitgenommen und gelangt dann, soweit es nicht schon durch die Durchtrittsöffnungen hindurchgedrückt wurde zu der Schneidkante. Mittels dieser Schneidkante werden dann auch im Passiergut enthaltene festere Bestandteile zerkleinert. Zudem üben die rippenartigen Erhebungen auf das Passiergut eine Haltefunktion aus, wodurch ein rasches Passieren gewährleistet ist.
Als besonders günstig hat es sich erwiesen, wenn der Topfboden des Siebteiles trichterförmig zur Topfmitte hin geneigt ist und die Passierflügel in Anpassung an den trichterförmig geneigten Topfboden des Siebteiles entsprechend geneigt verlaufen. Hierdurch wird das Passiergut in dem Siebteil radial nach innen zur Mitte des Siebteiles gedrängt und weicht beim Zerkleinerungsvorgang weniger stark aus.

Dadurch, daß die Passierflügel in Umfangsrichtung derart gewölbt ausgebildet sind, daß die in Drehrichtung voreilende Kante der Passierflügel gegenüber dem Topfboden des Siebteiles angehoben ist, gelangt das Passiergut zwangsläufig unter die Passierflügel und wird dann zerdrückt, wobei die rippenartigen Erhebungen die rasche und zielgerechte Zerkleinerung des Passiergutes unterstützen.

Die durch den trichterförmigen Verlauf des Topfbodens bereits begünstigte Förderung des Passiergutes zum Mittenbereich des Siebteiles hin, wird dadurch weiter verbessert, daß die Steigung der Wölbung von dem Nabenteil ausgehend zum freien Ende der Passierflügel hin abnimmt. Durch eine solche Ausbildung der Wölbung ergibt sich eine zum Zentrum des Siebteiles gerichtete schraubenartige Fläche durch die das Passiergut zum Zentrum hin gefördert wird.

Auf den Weitertransport des Passiergut in dem Siebteil wirkt es sich günstig aus, daß über die ganze Breite der Passierflügel verteilt rippenartige Erhebungen vorgesehen sind.

Dabei ist es vorteilhaft, daß die rippenartigen Erhebungen einen sägezahnartigen Querschnitt mit einer entgegen der Drehrichtung der Passierflügel flach ansteigenden Vorderflanke aufweisen. Dabei wird das Passiergut von den Erhebungen mitgenommen es kann aber nicht an den Erhebungen hängenbleiben.

Bei einem Passiergerät für eine Küchenmaschine mit einer von unten durch einen in der Mitte der Rührschüssel vorgesehenen rohrartigen Stutzen hindurchgeführten Abtriebswelle ist es besonders vorteilhaft, daß das Siebteil zentrisch zu seiner Topfbodenmitte eine sich in den Nabenteil des Passierwerkzeuges erstreckende domartige Erhebung aufweist und daß in dem Übergangsbereich zwischen der domartigen Erhebung und dem Topfboden eine Umlaufrinne ausgebildet ist, in die ein am Nabenteil axial vorstehender Umlaufrand eingreift. Durch die domartige Erhebung wird im Innern des Siebteiles ein innerer Topfmantel gebildet, durch den ein Vordringen des Passiergutes zu der Abtriebswelle verhindert wird. Ein solches Vordringen wird bereits weitgehend durch das Ineinandergreifen von dem Umlaufrand des Nabenteiles und der Umlaufrinne des Siebteiles unterbinden. Die ineinandergreifenden Teile wirken wie eine Labyrinthdichtung.

In die Umlaufrinne eingedrungene flüssige oder auch breiförmige Bestandteile des Passiergutes können über die am Grund der Umlaufrinne vorgesehene Durchtrittsbohrung aus der Umlaufrinne austreten, so daß es zu keiner Anstauung in der Umlaufrinne kommt.

Zur Erhöhung der Leistungfähigkeit des Passiergerätes trägt bei, daß zumindest ein Teil der Durchtrittsöffnungen des Siebteiles in an dessen Topfboden ausgeprägten, sich strahlenförmig erstreckenden Bodenvertiefungen vorgesehen ist, wobei die Bodenvertiefungen einen keilförmigem Querschnitt mit einer in Drehrichtung der Passierflügel voraneilenden abfallenden Flanke aufweisen. Durch die Ausbildung der Bodenvertiefungen mit keilförmigem Querschnitt ergibt sich eine in Drehrichtung der Passierflügel liegende scharfe Eckkante, die mit der an den Passierflügeln vorgesehenen Schneidkante nach Art von Scherenklingen zusammenwirkt. Somit können auch festere Bestandteile des Passiergutes wirksam zerkleinert werden.

Dadurch, daß die Bodenvertiefungen in ihrer Strahlrichtung einen entgegen der Drehrichtung der Passierflügel gebogenen sichelförmigen Verlauf besitzen, ergibt sich ein weitgehend stoßfreies Arbeiten des Passiergerätes, da die Eckkanten der Bodenvertiefungen und die Schneidkanten wegen des sichelförmigen Verlaufes der Eckkanten in Richtung der radialen Erstreckung der Passierflügel nur nach und nach in Eingriff kommen.

Ein Verstopfen der Durchtrittsöffnungen des Siebteiles wird dadurch vermieden, daß die Durchtrittsöffnungen zu der Austrittsseite des Passiergutes hin in ihrem Querschnitt erweitert sind.

Eine Verdrehsicherung für das in die Rührschüssel eingesetzte Siebteil ist dadurch gegeben, daß an dem Siebteil Rippenansätze vorgesehen sind, die mit entsprechenden an der Rührschüssel ausgebildeten Rippen zusammenwirken.
Besonders kostengünstig aus wenig Einzelteilen aufgebaut werden kann das Passiergerät, wenn nach einer weiteren bevorzugten Ausführungsform des Gegenstandes der Erfindung vorgesehen ist, daß das Passierwerkzeug und das Siebteil aus Kunststoff-Spritzguß gebildet sind.

Nach einer letzten bevorzugten Ausführungsform des Gegenstandes der Erfindung ist vorgesehen, daß sich die Tiefe der sich zumindest annähernd strahlenförmig erstreckenden Bodenvertiefungen von deren zentrumsnahen Ende zu deren zentrumsfernen Ende hin vergrößert. Hierdurch ist im Bereich der hohen Umfangsgeschwindigkeit des Passierwerkzeugs im Siebteil der Stauraum für Passiergut vergrößert, wodurch der Passiervorgang verbessert ist.

Anhand eines in der Zeichnung dargestellten Ausführungsbeispieles wird die Erfindung nachfolgend noch näher erläutert. Es zeigt:

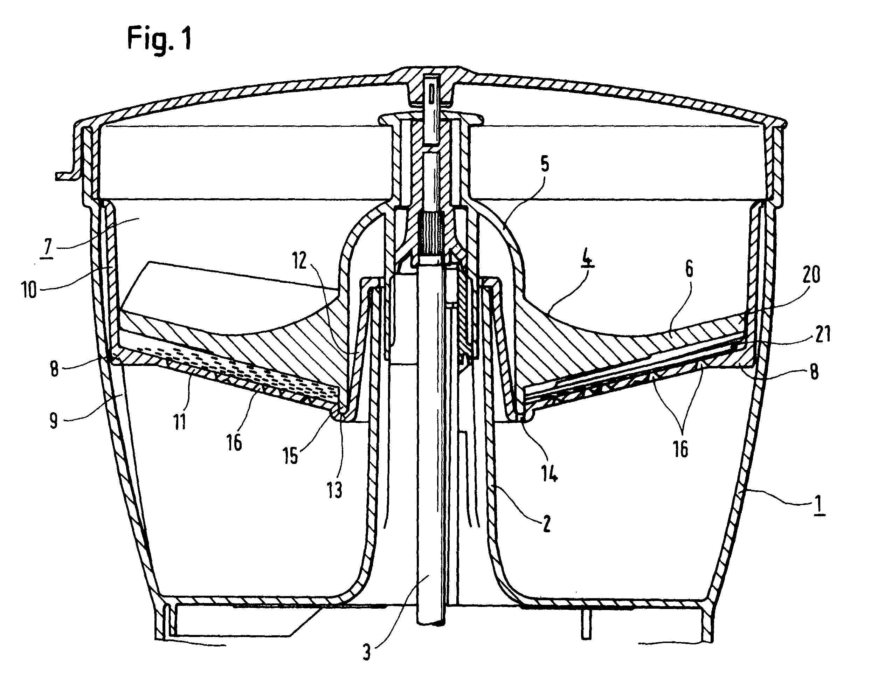

- Fig. 1: ein in die Rührschüssel einer Küchenmaschine eingesetztes Passierwerkzeug
- Fig. 2: ein topfförmig ausgebildetes Siebteil im Schnitt
- Fig. 3: das Querschnittsprofil eines Passierflügels in dem an den Nabenteil angrenzenden Bereich
- Fig. 4: das Querschnittsprofil eines Passierflügels im Bereich von dessen Mitte
- Fig. 5: das Querschnittsprofil eines Passierflügels im Bereich seines freien Endes

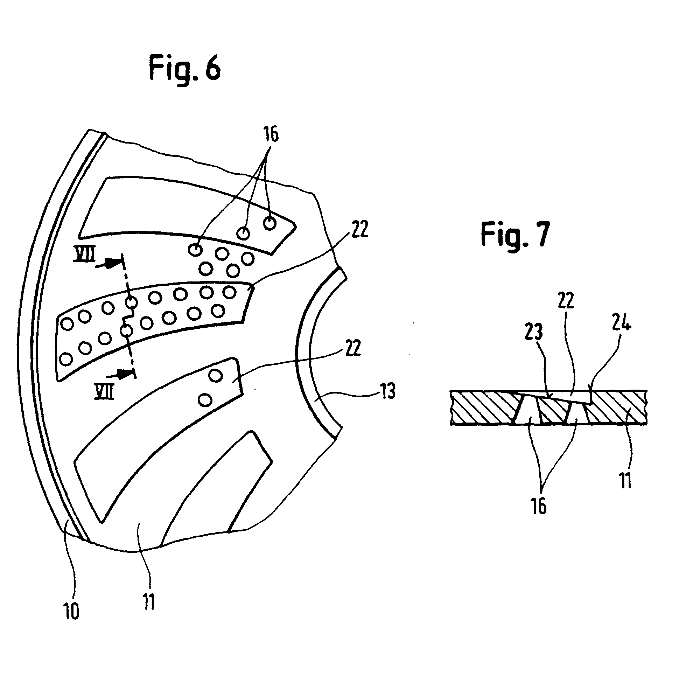

- Fig. 6: einen Ausschnitt des Topfbodens des Siebteiles in Draufsicht
- Fig. 7: eine Bodenvertiefung im Schnitt entlang der Linie VII-VII in Fig.6

Mit 1 ist die Rührschüssel einer Küchenmaschine bezeichnet, die in ihrer Mitte einen rohrartigen Stutzen 2 aufweist, durch den eine unterhalb des Bodens der Rührschüssel 1 von dem Antriebsmotor der Küchenmaschine angetriebene Abtriebswelle 3 nach oben herausgeführt ist. Auf das aus dem Stutzen 2 herausragende mit Mitnehmern versehene Ende der Abtriebswelle 3 ist ein Passierwerkzeug 4 mit seinem Nabenteil 5 aufgesteckt. Hierzu weist das Nabenteil 5 in einer Aufstecköffnung mit den Mitnehmern der Abtriebswelle 3 zusammenwirkende Aufnahmen auf. Durch das Eingreifen der Mitnehmer in die Aufnahmen wird eine drehfeste Koppelung des Passierwerkzeuges mit der Abtriebswelle 3 erreicht.

An der Außenseite des eine glockenförmige Gestalt aufweisenden Nabenteiles 5 sind zwei sich nach radial außen erstreckende Passierflügel 6 angeformt. Diese Passierflügel 6 befinden sich im Betriebszustand im Aufnahmeraum eines topfförmig ausgebildeten und in die Rührschüssel 1 eingesetzte Siebteils 7. Am Siebteil 7 sind Rippenansätze 8 vorgesehen, die mit an der Rührschüssel 1 angeprägten Rippen 9 zusammenwirken und das Siebteil 7 gegen Verdrehen sichern. Das Siebteil 7 wird von einem Topfmantel 10 umgrenzt. Der Topfboden 11 des Siebteiles 7 ist trichterförmig zur Topfmitte hin geneigt. Im Mittenbereich des Siebteiles 7 ist eine domartige Erhebung 12 ausgebildet, mit der das Siebteil 7 auf das freie Ende des Stutzens 2 der Rührschüssel 1 aufgesteckt ist. Im Übergangsbereich zwischen der domartigen Erhebung 12 und dem Topfboden 11 ist eine Umlaufrinne 13 in den Topfboden 11 eingeformt. Diese Umlaufrinne 13 weist an ihrem Grund mindestens eine Durchtrittsbohrung 14 auf, durch die in die Umlaufrinne 13 gelangte, aus dem Passiergut ausgetretene Flüssigkeitsteile oder auch breiige Bestandteile des Passiergutes aus der Umlaufrinne 13 abgeführt werden können. In die Umlaufrinne 13 greift ein an dem Nabenteil 5 axial vorstehender Umlaufrand 15 ein. Die Umlaufrinne 13 und der Umlaufrand 15 bilden somit eine Art Labyrinthdichtung, durch die ein Eindringen von Passiergut in den zwischen dem Nabenteil 5 und der domartigen Erhebung 12 liegenden Raum zumindest weitgehend unterbunden wird.

Im Topfboden 11 des Siebteiles 7 sind Durchtrittsöffnungen 16 vorgesehen, durch die das Passiergut von den Passierflügeln 6 hindurchgepreßt wird. Die Durchtrittsöffnungen 16 sind zu der Austrittsseite des Passiergutes hin konisch erweitert. Durch eine solche Erweiterung wird ein Verstopfen der Durchtrittsöffnungen 16 vermieden.

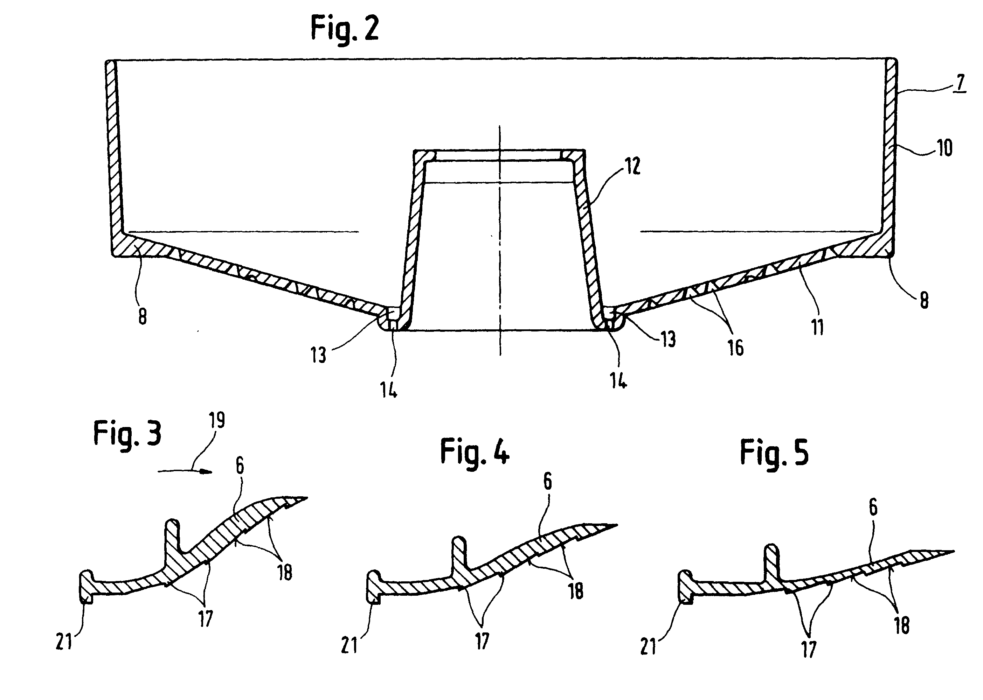

Die Passierflügel 6 weisen auf ihrer dem Topfboden 11 des Siebteiles 7 zugewandten Seite mehrere sägezahnförmige Erhebungen 17 auf, welche sich vom Nabenteil 5 hin zum freien Ende der Passierflügel 6 erstrecken. Die Vorderflanke 18 dieser Erhebungen 17 ist entgegen der Drehrichtung der Passierflügel 6, welche in Fig. 3 durch einen Pfeil 19 angedeutet ist, flach ansteigend ausgebildet. Infolge diese flachen Anstieges wird einerseits soweit als möglich ein Hängenbleiben von Passiergut an den Erhebungen 17 vermieden und andererseits bewirken die Erhebungen 17 eine ausreichende Weiterförderung des Passiergutes.

Wie aus den Passierflügel-Querschnittsprofilen der Fig. 3 - 5 zu ersehen ist, weist die Wölbung der Passierflügel 6 eine vom Nabenteil 5 zum freien Ende 20 der Passierflügel 6 hin abnehmende Steigung auf, d. h. vom Nabenteil 5 ausgehend flacht die Wölbung zum freien Ende 20 hin ab. Hierdurch ergibt sich eine schraubenähnlich verdrehte Fläche der Passierflügel 6. Durch diese schraubenähnliche Verdrehung wird auf das Passiergut eine zur Mitte des Siebteiles 7 hin gerichtete Kraft ausgeübt. Die bereits durch den trichterförmigen Verlauf des Topfbodens 11 vorgegebene Förderung des Passiergutes zur Mitte des Siebteiles 7 wird somit noch unterstützt.

An der in Drehrichtung (Pfeil 19 ) nacheilenden Endkante der Passierflügel 6 ist eine zum Topfboden 11 des Siebteiles 7 vorspringende Schneidkante 21 ausgebildet. Diese Schneidkante 21 weist gegenüber dem Topfboden 11 einen minimalen Abstand auf. Damit wird die Menge des unter der Schneidkante 21 durchgleitenden Passiergutes wesentlich reduziert. Außerdem vermag diese Schneidkante 21 wegen ihrer scharfen Kante insbesondere festere Bestandteile des Passiergutes ohne Schwierigkeiten zu zerkleinern.

Am Topfboden 11 des Siebteiles 7 sind ferner sich strahlenförmig vom Mittenbereich des Topfbodens 11 aus zu dem Topfmantel 10 hin erstreckende Bodenvertiefungen 22 vorgesehen, in denen ein Teil der Durchtrittsöffnungen 16 angeordnet ist. Weitere Durchtrittsöffnungen 16 können in dem zwischen den Bodenvertiefungen 22 liegenden Bereich des Topfbodens 11 vorgesehen sein. Die Bodenvertiefungen 22 weisen einen solchen keilförmigen Querschnitt auf, daß sich für die Bodenvertiefungen 22 eine in Drehrichtung der Passierflügel 6 abfallende Flanke 23 ergibt. Somit wird auf der in Drehrichtung liegenden Begrenzungseite der Bodenvertiefungen 22 eine scharfe Eckkante 24 geschaffen. Diese scharfe Eckkante 24 wirkt mit der Schneidkante 21 nach Art einer von Scherenklingen zusammen. Dies führt zu einer Verbesserung beim Zerkleinern des Passiergutes.

Die Bodenvertiefungen 22 sind sichelförmig gegen die Drehrichtung der Passierflügel 6 gebogen. Damit kommen die scharfen Eckkanten 24 mit der rotierenden Schneidkante 21 bei deren Drehbewegung über ihre gesamte radiale Erstreckung nur nach und nach in Eingriff, d.h. der Eingriff zwischen der Schneidkante 21 und den Eckkanten 24 erfolgt stetig, so daß Belastungstöße für den Antriebsmotor vermieden werden.

## Patentansprüche

1. Passiergerät für eine Küchenmaschine, das aus einem topfartig ausgebildeten, drehfest in die Rührschüssel (1) der Küchenmaschine einsetzbaren, mit Durchtrittsöffnungen (16) versehenen Siebteil (7) und einem zugeordneten Passierwerkzeug (4) besteht, das an einem mit einer Abtriebswelle der Küchenmaschine kuppelbaren Nabenteil (5) wenigstens zwei Passierflügel (6) aufweist, die in geringem axialen Abstand über dem Siebteil (7) rotieren, bei welchem Passierwerkzeug (4) die Passierflügel (6) auf ihrer dem Siebteil (7) zugewandten Seite mit mehreren rippenartigen, sich im wesentlichen über die ganze Länge der Passierflügel (6) erstreckenden Erhebungen (17) versehen sind **dadurch gekennzeichnet, daß** die Passierflügel (6) ferner an ihrer in Drehrichtung (19) nacheilenden Endkante eine zum Siebteil (7) hin vorstehende Schneidkante (21) aufweisen

2. Passiergerät nach Anspruch 1, **dadurch gekennzeichnet, daß** der Topfboden (11) des Siebteiles (7) trichterförmig zur Topfmitte hin geneigt ist und die Passierflügel (6) in Anpassung an den trichterförmig geneigten Topfboden (11) des Siebteiles (7) entsprechend geneigt verlaufen.

3. Passiergerät nach Anspruch 1 oder 2, **dadurch gekennzeichnet, daß** die Passierflügel (6) in Umfangsrichtung derart gewölbt ausgebildet sind, daß die in Drehrichtung (19) voreilende Kante der Passierflügel (6) gegenüber dem Topfboden (11) des Siebteiles (7) angehoben ist.

4. Passiergerät nach Anspruch 3, **dadurch gekennzeichnet, daß** die Steigung der Wölbung von dem Nabenteil(5) ausgehend zum freien Ende (20) der Passierflügel (6) hin abnimmt.

5. Passiergerät nach einem der vorhergehenden Ansprüche, **dadurch gekennzeichnet, daß** über die ganze Breite der Passierflügel (6) verteilt rippenartige Erhebungen (17) vorgesehen sind.

6. Passiergerät nach Anspruch 5, **dadurch gekennzeichnet, daß** die rippenartigen Erhebungen (17) einen sägezahnartigen Querschitt mit einer entgegen der Drehrichtung (19) der Passierflügel (6) flach ansteigenden Vorderflanke (18) aufweisen.

7. Passiergerät nach einem der vorhergehenden Ansprüche, für eine Küchenmaschine mit einer von unten durch einen in der Mitte der Rührschüssel (1) vorgesehenen rohrartigen Stutzen (2) hindurchgeführten Abtriebswelle (3), **dadurch gekennzeichnet, daß** das Siebteil (7) zentrisch zu seiner Topfbodenmitte (11) eine sich in den Nabenteil (5) des Passierwerkzeuges (4) erstreckende domartige Erhebung (12) aufweist und daß in dem Übergangsbereich zwischen der domartigen Erhebung (12) und dem Topfboden (11) eine Umlaufrinne (13) ausgebildet ist, in die ein am Nabenteil (5) axial vorstehender Umlaufrand (15) eintaucht.

8. Passiergerät nach Anspruch 7, **dadurch gekennzeichnet, daß** die Umlaufrinne (13) an ihrem Grund mindestens eine Durchtrittsbohrung (14) aufweist.

9. Passiergerät nach einem der vorhergehenden Ansprüche, **dadurch gekennzeichnet, daß** zumindest ein Teil der Durchtrittsöffnungen (16) des Siebteiles (7) in an dessen Topfboden (11) ausgeprägten, sich zumindest annähernd strahlenförmig erstreckenden Bodenvertiefungen (22) vorgesehen ist, wobei die Bodenvertiefungen (22) einen keilförmigem Querschitt mit einer in Drehrichtung (19) der Passierflügel (6) voraneilegenden, abfallenden Flanke (23) aufweisen.

10. Passiergerät nach Anspruch 9, **dadurch gekennzeichnet, daß** die abfallende Flanke (23) und die Schneidkante (21) unter Bildung eines Schneidspalters zueinander angeordnet sind.

11. Passiergerät nach Anspruch 9, **dadurch gekennzeichnet, daß** die Bodenvertiefungen (22) in ihrer Strahlrichtung einen entgegen der Drehrichtung (19) der Passierflügel (6) gebogenen sichelförmigen Verlauf besitzen.

12. Passiergerät nach Anspruch 9 oder 10, **dadurch gekennzeichnet, daß** sich die Tiefe der sich zumindest annähernd strahlenförmig erstreckenden Bodenvertiefungen (22) von deren zentrumsnahen Ende zu deren zentrumsfernen Ende vergrößert.

13. Passiergerät nach Anspruch 9, **dadurch gekennzeichnet, daß** die Durchtrittsöffnungen (16) zu der Austrittsseite des Passiergutes hin in ihrem Querschnitt erweitert sind.

14. Passiergerät nach einem der vorhergehenden Ansprüche, **dadurch gekennzeichnet, daß** an dem Siebteil (7) Rippenansätze (8) vorgesehen sind, die mit entsprechenden, an der Rührschüssel (1) ausgebildeten Rippen (9) zusammenwirken.

15. Passiergerät nach einem der vorhergehenden Ansprüche, **dadurch gekennzeichnet, daß** das Passierwerkzeug (4) und das Siebteil (7) aus Kunststoff-Spritzguß gebildet sind.

## Claims

1. Strainer for a kitchen machine, which consists of a sieve part (7), which is constructed to be pot-shaped and is insertable in rotationally fast manner into the mixer bowl (1) of the kitchen machine and which is provided with passage openings (16), and an associated strainer tool (4) which has, at a hub part (5) able to be coupled with a driven shaft of the kitchen machine, at least two strainer vanes (6) which rotate at a small axial spacing above the sieve part (7), in which strainer tool (4) the strainer vanes (6) are provided on the side thereof facing the sieve part (7) with several rib-shaped elevations (17) extending over substantially the entire length of the strainer vanes (6), **characterised in that** the strainer vanes (6) further have at the end edge thereof trailing in the direction (19) of rotation a cutting edge (21) projecting towards the sieve part (7).

2. Strainer according to claim 1, **characterised in that** the pot base (11) of the sieve part (7) is inclined in funnel shape towards the pot centre and the strainer vanes (6) extend at a corresponding inclination in adaptation to the pot base (11), which is inclined in funnel shape, of the sieve part (7)

3. Strainer according to claim 1 or 2, **characterised in that** the strainer vanes (6) are curved in circumferential direction in such a manner that the edges, which are leading in direction (19) of rotation, of the strainer vanes (6) are elevated relative to the pot base (11) of the sieve part (7).

4. Strainer according to claim 3, **characterised in that** the gradient of the curvature decreases going out from the hub part (5) towards the free end (20) of the strainer vanes (6).

5. Strainer according to one of the preceding claims, **characterised in that** rib-shaped elevations (17) are provided in distribution over the entire width of the strainer vanes (6).

6. Strainer according to claim 5, **characterised in that** the rib-shaped elevations (17) have a sawtooth-shaped cross-section with a front flank (18) rising flatly counter to the direction (19) of rotation of the strainer vanes (6).

7. Strainer according to one of the preceding claims, for a kitchen machine with a driven shaft (3) guided from below through a tubular stub pipe (2) provided in the centre of the mixer bowl (1), **characterised in that** the sieve part (7) has centrally with respect to the pot base centre (11) thereof a dome-shaped elevation (12) extending in the hub part (5) of the strainer tool (4) and that an encircling channel (13), into which an encircling edge (15) axially projecting at the hub part (5) dips, is formed in the transition region between the dome-like elevation (12) and the hot base (11).

8. Strainer according to claim 7, **characterised in that** the encircling channel (13) has at least one passage bore (14) at the base thereof.

9. Strainer according to one of the preceding claims, **characterised in that** at least a part of the passage openings (16) of the sieve part (7) is provided in base depressions (22) which are stamped at the pot base (11) of the sieve part and which extend at least approximately in radiating form, wherein the base depressions (22) have a wedge-shaped cross-section with a descending flank (23) leading in the direction (19) of rotation of the strain vanes (6).

10. Strainer according to claim 9, **characterised in that** the descending flank (23) and the cutting edge (21) are arranged relative to one another with formation of a cutting gap.

11. Strainer according to claim 9, **characterised in that** the base depressions (22) have in the direction of radiation thereof a sickle-shaped course bent counter to the direction (19) of rotation of the strainer vanes (6).

12. Strainer according to claim 9 or 10, **characterised in that** the depth of the base depressions (22) extending at least approximately in radiating form increases from the end thereof near the centre to the end thereof remote from the centre.

13. Strainer according to claim 9, **characterised in that** the passage openings (16) are enlarged in the cross-section thereof towards the exit side of the material to be strained.

14. Strainer according to one of the preceding claims, **characterised in that** rib protrusions (8), which co-operate with corresponding ribs (9) formed at the mixer bowl (1), are provided at the sieve part (7).

15. Strainer according to one of the preceding claims, **characterised in that** the strainer tool (4) and the sieve part (7) are formed from synthetic material injection moulding.

## Revendications

1. Passoire pour un robot ménager, constituée d'une pièce en passoire (7) formée de manière similaire à un pot, insérable dans le récipient mélangeur (1) du robot ménager de façon fixe, munie d'orifices de passage (16), et d'un outil de passoire (4) correspondant, qui présente au moins deux ailettes de passoire (6) sur une pièce de moyeu (5) pouvant être accouplée à un arbre de sortie du robot ménager, ces ailettes de passoire étant en rotation au-dessus de la pièce en passoire (7) avec un écart axial faible, dans lequel l'outil de passoire (4), les ailettes de passoire (6) sont munies sur leur côté tourné vers la pièce en passoire (7) de plusieurs élévations (17) en forme de nervures s'étendant essentiellement sur toute la longueur des ailettes de passoire (6), **caractérisée en ce que** les ailettes de passoire (6) présentent en outre, sur leur arête terminale en retard du sens de rotation (19), une arête de coupe (21) dépassant en direction de la pièce de passoire (7).

2. Passoire suivant la revendication 1, **caractérisée en ce que** le fond de pot (11) de la pièce en passoire (7) est incliné en forme d'entonnoir en direction du centre du pot et **en ce que** les ailettes de passoire (6) ont une allure correspondante inclinée pour s'adapter au fond de pot (11) incliné en forme d'entonnoir de la pièce de passoire (7).

3. Passoire suivant la revendication 1 ou 2, **caractérisée en ce que** les ailettes de passoire (6) sont formées en étant courbées dans le sens circonférentiel, de telle sorte que l'arête des ailettes de passoire (6) en avance du sens de rotation (19) est soulevée par rapport au fond de pot (11) de la pièce en passoire (7).

4. Passoire suivant la revendication 3, **caractérisée en ce que** la pente de la courbe, partant de la pièce de moyeu (5) en direction de l'extrémité libre (20) des ailettes de passoire (6), décroît.

5. Passoire suivant l'une quelconque des revendications précédentes, **caractérisée en ce que** des élévations (17) en forme de nervures, réparties sur toute la largeur des ailettes de passoire (6), sont prévues.

6. Passoire suivant la revendication 5, **caractérisée en ce que** les élévations (17) en forme de nervures présentent une section en forme de dents de scie, avec un flanc avant (18) croissant de manière plane en sens inverse du sens de rotation (19) des ailettes de passoire (6).

7. Passoire suivant l'une quelconque des revendications précédentes, pour un robot ménager comprenant un arbre de sortie (3) traversant, par le bas, une douille (2) en forme de tube prévue au milieu du récipient mélangeur (1), **caractérisée en ce que** la pièce en passoire (7) présente, de manière centrale par rapport à son milieu du fond de pot (11), une élévation (12) en forme de dôme s'étendant dans la pièce de moyeu (5) de l'outil de passoire (4) et **en ce qu'**une rigole circulaire (13) est formée dans la partie intermédiaire entre l'élévation (12) en forme de dôme et le fond de pot (11), dans laquelle pénètre un bord périphérique (15) dépassant axialement sur la pièce de moyen (5).

8. Passoire suivant la revendication 7, **caractérisée en ce que** la rigole circulaire (13) présente au moins un orifice de passage (14) sur son fond.

9. Passoire suivant l'une quelconque des revendications précédentes, **caractérisée en ce qu'**au moins une partie des orifices de passage (16) de la pièce en passoire (7) est prévue dans les approfondissements du fond (22) imprégnés dans le fond de pot (11) de cette pièce en passoire et s'étendant au moins approximativement en forme de rayons, les approfondissements du fond (22) présentant une section de forme biaisée avec un flanc (23) retombant, en avance du sens de rotation (19) des ailettes de passoire (6).

10. Passoire suivant la revendication 9, **caractérisée en ce que** le flanc retombant (23) et l'arête bord de coupe (21) sont placés en formant un jeu de découpe l'un par rapport à l'autre.

11. Passoire suivant la revendication 9, **caractérisée en ce que** les approfondissements de fond (22) possèdent, dans leur sens radial, une allure courbée en forme de faucille, en sens inverse du sens de rotation (19) des ailettes de passoire (6).

12. Passoire suivant la revendication 9 ou 10, **caractérisée en ce que** la profondeur des approfondissements de fond (22) s'étendant au moins approximativement en forme de rayons augmente, de leur extrémité proche du centre vers leur extrémité éloignée du centre.

13. Passoire suivant la revendication 9, **caractérisée en ce que** les ouvertures de passage (16) ont une section élargie vers le côté de sortie des aliments à passer.

14. Passoire suivant l'une quelconque des revendications précédentes, **caractérisée en ce que** des bouts de nervures (8) sont prévus sur la pièce en passoire (7), ceux-ci agissant avec des nervures (9) correspondantes formées sur le récipient mélangeur (1).

15. Passoire suivant l'une quelconque des revendications précédentes, **caractérisée en ce que** l'outil de passoire (4) et la pièce en passoire (7) sont réalisés en matière plastique et obtenus par moulage par injection.
